(19) Europäisches Patentamt
European Patent Office
Office européen des brevets

(11) **EP 3 363 143 B1**

(12) **FASCICULE DE BREVET EUROPEEN**

(45) Date de publication et mention de la délivrance du brevet:
**18.03.2020 Bulletin 2020/12**

(51) Int Cl.:
**H04L 9/00** (2006.01)

(21) Numéro de dépôt: **16784814.2**

(22) Date de dépôt: **12.10.2016**

(86) Numéro de dépôt international:
**PCT/EP2016/074386**

(87) Numéro de publication internationale:
**WO 2017/064085 (20.04.2017 Gazette 2017/16)**

(54) **MÉTHODE D'INTERROGATION CONFIDENTIELLE D'UNE BASE DE DONNÉES CHIFFRÉE**

VERFAHREN ZUR VERTRAULICHEN ABFRAGE EINER VERSCHLÜSSELTEN DATENBANK

METHOD FOR CONFIDENTIALLY QUERYING AN ENCRYPTED DATABASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2015 FR 1559774**

(43) Date de publication de la demande:
**22.08.2018 Bulletin 2018/34**

(73) Titulaire: **Commissariat à l'Energie Atomique et aux Energies Alternatives**
**75015 Paris (FR)**

(72) Inventeurs:
• **CARPOV, Sergiu**
**91300 Massy (FR)**
• **SIRDEY, Renaud**
**78720 Cernay-la-Ville (FR)**
• **FAU, Simon**
**92220 Bagneux (FR)**
• **STAN, Oana**
**91300 Massy (FR)**

(74) Mandataire: **Brevalex**
**56, Boulevard de l'Embouchure**
**B.P. 27519**
**31075 Toulouse Cedex 2 (FR)**

(56) Documents cités:

• **SRINATH SETTY ET AL: "Taking proof-based verified computation a few steps closer to practicality (extended version)",** INTERNATIONAL ASSOCIATION FOR CRYPTOLOGIC RESEARCH,, vol. 20130228:071118, 28 février 2013 (2013-02-28), pages 1-25, XP061007148,
• **ANNE CANTEAUT ET AL: "How to Compress Homomorphic Ciphertexts",** INTERNATIONAL ASSOCIATION FOR CRYPTOLOGIC RESEARCH,, vol. 20150224:095450, 24 février 2015 (2015-02-24), pages 1-25, XP061017866,
• **DAVID CASH ET AL: "Highly-Scalable Searchable Symmetric Encryption with Support for Boolean Queries",** INTERNATIONAL ASSOCIATION FOR CRYPTOLOGIC RESEARCH,, vol. 20130816:211344, 16 août 2013 (2013-08-16), pages 1-45, XP061008014,
• **Shiyuan Wang ET AL: "Is Homomorphic Encryption the Holy Grail for Database Queries on Encrypted Data?", ,** 1 February 2012 (2012-02-01), XP055626324, Retrieved from the Internet: URL:https://p2p.cs.ucsb.edu/research/tech_reports/reports/2012-01.pdf [retrieved on 2019-09-26]
• **Murali Mani ET AL: "Enabling Secure Database as a Service using Fully Homomorphic Encryption: Challenges and Opportunities", ,** 13 February 2013 (2013-02-13), XP055626344, Retrieved from the Internet: URL:https://pdfs.semanticscholar.org/7a0d/d51ebafeed4fe9e957d6d5a4c5264b9b1dd9.pdf [retrieved on 2019-09-26]

**Description**

**DOMAINE TECHNIQUE**

La présente invention concerne le domaine de l'interrogation confidentielle d'une base de données chiffrée. L'invention fait appel à la cryptographie entièrement homomorphe ou FHE (*Full Homomorphic Encryption*) voire à la cryptographie partiellement homomorphe ou SWHE (*SomeWhat Homomorphic Encryption*). Elle s'applique plus particulièrement à un contexte d'informatique en nuage (*cloud computing*).

**ÉTAT DE LA TECHNIQUE ANTÉRIEURE**

Le développement récent de l'informatique en nuage a permis à de nombreuses entreprises d'externaliser leurs bases de données dans des centres de données (*data centers*). Toutefois cette nouvelle pratique, si elle permet de réduire des investissements lourds dans des équipements informatiques, ne va pas sans poser de sérieux problèmes de confidentialité, tant des données stockées dans la base que du contenu des requêtes de recherche. Dans la plupart des secteurs d'activité, notamment dans le domaine médical, financier ou économique, il est essentiel que la confidentialité des données et du contenu des requêtes puisse être garantie non seulement vis-à-vis d'un tiers malveillant mais également vis-à-vis du fournisseur de service informatique en nuage lui-même.

Pour satisfaire à cette exigence de confidentialité, on est naturellement conduit à effectuer un chiffrement de tout ou partie des données de l'utilisateur stockées dans la base. Toutefois un simple chiffrement s'avère insuffisant en pratique dans la mesure où la recherche des enregistrements répondant à une requête de l'utilisateur révèle les emplacements où ceux-ci sont stockés. Un tiers malveillant, voire le fournisseur lui-même, peut alors associer les enregistrements chiffrés aux requêtes de l'utilisateur et en déduire des informations confidentielles.

L'article de S. Wang et al. intitulé « Is homomorphic encryption the Holy Grail for data base queries on encrypted data ? », Technical report, Université de Californie, Santa Barbara, 2012, propose une méthode d'interrogation confidentielle d'une base de données dont les enregistrements sont chiffrés au moyen d'un cryptosystème totalement homomorphe.

On rappelle tout d'abord qu'un chiffrement totalement homomorphe ou FHE (*Full Homomorphic* Cryptography) est un chiffrement asymétrique $Enc_{pk}$ (de clé publique *pk*) vérifiant les relations suivantes:

$$Enc_{pk} : \quad X \rightarrow Y$$

$$\forall a,b \in X, \ Enc_{pk}(a+b) = Enc_{pk}(a) \oplus Enc_{pk}(b) \quad\quad (1\text{-}1)$$

$$\forall a,b \in X, \ Enc_{pk}(a.b) = Enc_{pk}(a) \otimes Enc_{pk}(b) \quad\quad (1\text{-}2)$$

où *X* est l'espace des messages clairs (dit plus simplement espace des clairs) et *Y* est l'espace des messages chiffrés (dit plus simplement espace des chiffrés), + et . sont respectivement une opération additive et une opération multiplicative dans l'espace des clairs conférant à *X* une structure d'anneau $(X,+,.)$, $\oplus$ et $\otimes$ sont des opérations correspondantes dans l'espace des chiffrés conférant à *Y* une structure d'anneau $(Y, \oplus, \otimes)$. On comprend des expressions (1-1) et (1-2) que l'application $Enc_{pk}$ de $(X,+,.)$ dans $(Y, \oplus, \otimes)$ est un homomorphisme d'anneaux.

En pratique, un chiffrement totalement homomorphe est un chiffrement probabiliste, c'est-à-dire dépendant d'un paramètre aléatoire (ou bruit) *r*. Le chiffrement d'un message clair *m* peut ainsi donner différents messages chiffrés $Enc_{pk}(m,r)$ suivant la valeur prise par le paramètre *r*. Toutefois, quelle que soit la valeur prise par ce paramètre, le déchiffrement de $Enc_{pk}(m,r)$ redonne toujours le message clair *m*. Si l'on note $Dec_{sk}$ la fonction de déchiffrement correspondant à $Enc_{pk}$ (où *sk* est la clé secrète de l'utilisateur), on a donc :

$$Dec_{sk}\left( Enc_{pk}(m,r) \right) = m \quad\quad (2)$$

Dans la suite, on adoptera une notation plus simple pour alléger l'exposé, soit $\overline{m} = Enc_{pk}(m,r)$ et l'on conviendra d'omettre dans les expressions de chiffrement/ déchiffrement la mention des clés publique et privée. Ainsi, on a $Dec(\overline{m})$ = *m*.

On définit un cryptosystème par un couple d'une fonction de chiffrement *Enc*(.) et d'une fonction déchiffrement *Dec*(.). Ainsi, un cryptosystème totalement homomorphe, vérifie avec les notations précédentes :

$$Dec\left[\overline{a} \oplus \overline{b}\right] = a + b \qquad (3\text{-}1)$$

$$Dec\left[\overline{a} \otimes \overline{b}\right] = a.b \qquad (3\text{-}2)$$

Autrement dit, un chiffrement totalement homomorphe permet de calculer n'importe quelle combinaison d'opérations d'addition et de multiplication sur des clairs à partir d'opérations correspondantes sur les chiffrés. En règle générale, l'espace des clairs est le corps des booléens $X=\mathbf{Z}/2\mathbf{Z}$, l'opération additive étant un OU exclusif (XOR) et l'opération multiplicative un ET (AND). Il est alors possible d'effectuer des opérations logiques sur des valeurs booléennes à partir d'opérations correspondantes sur leurs valeurs chiffrées.

Il convient de noter que lorsque la méthode de chiffrement ne permet de calculer des combinaisons d'opérations d'addition et de multiplication sur des clairs qu'avec une certaine profondeur de combinaison, on préfère utiliser le qualificatif de « partiellement homomorphe ».

L'article de S. Wang précité propose de calculer un booléen chiffré pour chaque enregistrement de la base données, ce booléen indiquant si l'enregistrement en question satisfait ou non à la requête de l'utilisateur. Le serveur ne connaissant pas le nombre d'enregistrements satisfaisant à la requête, l'utilisateur lui fournit une borne supérieure, $M'$, du nombre d'enregistrements qui peuvent lui être retournés, ainsi qu'un paramètre de qualité de résultat $\gamma$. Le serveur utilise un buffer de taille fixe $B$ proportionnelle à $\gamma M'$ dans lequel il stocke les enregistrements, chaque enregistrement du buffer étant stocké de manière aléatoire parmi les $\gamma$ positions du buffer. Un enregistrement ne répondant pas à la requête est stocké sous forme d'une valeur nulle chiffrée $(\overline{0})$ et n'a donc pas d'influence sur le déchiffrement. En revanche, un enregistrement correspondant à la requête est stocké et pourra être déchiffré s'il n'entre pas en collision avec un autre enregistrement. Cette approche probabiliste n'est toutefois pas entièrement satisfaisante dans la mesure où la réponse du serveur peut ne pas être exhaustive, son degré d'exhaustivité dépendant du paramètre de qualité $\gamma$.

Afin de remédier à ce défaut d'exhaustivité, l'article de M. Mani et al. intitulé « Enabling secure database as a service using fully homomorphic properties : challenges and opportunities », publié dans arXiv preprint, 13 Février 2013, pp. 1-13 propose de calculer un booléen chiffré pour chaque enregistrement de la base de données, comme précédemment, puis de procéder en deux temps. Dans un premier temps, le serveur du fournisseur de service détermine le nombre $\overline{M}$ d'enregistrements répondant à la requête (nombre de « hits ») en sommant les booléens chiffrés, et le transmet à l'utilisateur. Celui-ci déchiffre ce nombre et demande au serveur de lui transmettre $M'>M$ premiers enregistrements. Le nombre $M'$ est transmis en clair. Le serveur ordonne alors de manière confidentielle les enregistrements selon les valeurs des booléens chiffrés, autrement dit les M' premiers enregistrements de la table ainsi ordonnée contiennent les $M$ enregistrements satisfaisant à la requête. Cette méthode permet de cacher le nombre $M$ d'enregistrements correspondant au résultat.

Cette méthode d'interrogation confidentielle préserve bien la confidentialité du résultat mais présente l'inconvénient de requérir un ordonnancement de toute la base de données à chaque requête.

Le but de la présente invention est par conséquent de proposer une méthode d'interrogation confidentielle d'une base de données, chiffrée par chiffrement totalement homomorphe voire partiellement homomorphe, qui remédie à tout ou partie des inconvénients précités, en particulier qui présente un haut degré de confidentialité sans accroissement sensible de la complexité des calculs.

**EXPOSÉ DE L'INVENTION**

La présente invention est définie par une méthode d'interrogation confidentielle d'une base de données hébergée par un serveur, selon la revendication indépendante 1, la base de données contenant une table d'enregistrements, chaque enregistrement étant obtenu au moyen d'un chiffrement totalement homomorphe voire partiellement homomorphe de valeurs en clair, dans laquelle :

(a) l'utilisateur transmet une requête ($R$), comprenant un prédicat au serveur, ledit prédicat étant une expression logique portant sur un ou plusieurs champs de la table d'enregistrements ;
(b) le serveur calcule la valeur booléenne chiffrée du prédicat pour chaque enregistrement de la table ;
caractérisée en ce que

(c) le serveur construit un conteneur ($B_m$) comprenant un nombre prédéterminé ($K$) d'emplacements et stocke à l'aveugle aux dits emplacements des enregistrements vérifiant le prédicat et non déjà transmis à l'utilisateur, à partir des valeurs booléennes chiffrées ($\overline{r}_i$, $i = 1,...,N$) obtenues à l'étape (b);

(d) le serveur transmet à l'utilisateur le conteneur ainsi construit ;

(e) l'utilisateur reçoit le conteneur, déchiffre le contenu de chaque emplacement, et détermine si le conteneur est plein ou non;

(f1) si le conteneur est plein, l'utilisateur transmet une requête de continuation ($RC_m$) au serveur pour une nouvelle itération des étapes (c), (d) et (e) ;

(f2) si le conteneur n'est pas plein, l'utilisateur obtient la réponse à ladite requête à partir des enregistrements stockés dans les conteneurs reçus et déchiffrés à l'étape ou aux étapes (e).

La table d'enregistrements est avantageusement représentée par une matrice $\overline{T}$ de taille $N \times P$ où $N$ est le nombre d'enregistrements de la table et $P$ le nombre de champs de ces enregistrements, un élément chiffré $\overline{A}$ de la matrice étant obtenu à partir de sa valeur en clair

$$A = \sum_{q=0}^{Q-1} a_q 2^q$$

par $\overline{A} \equiv \overline{a_0}, \overline{a_1}, ..., \overline{a_{Q-1}}$ où $a_q$, $q=0,...,Q$-1 sont les bits de la valeur en clair et $\overline{a_q}$, $q=0,...,Q$-1 sont leurs chiffrés correspondants, obtenus par ledit chiffrement totalement homomorphe voire partiellement homomorphe.

Le prédicat est évalué sur les différents enregistrements, typiquement au moyen d'opérations additives $\oplus$ et multiplicatives $\otimes$ portant sur les éléments chiffrés.

Le conteneur est avantageusement représenté par une matrice $\overline{\mathbf{B}}$ de taille $K \times P$ avec $K < N$, le serveur construisant la matrice $\overline{\mathbf{B}}$ en initialisant les éléments de cette matrice à zéro et en mettant à jour les lignes de cette matrice de manière itérative en balayant tous les enregistrements de la table d'enregistrements, ladite mise à jour étant effectué au moyen d'une opération d'affectation :

$$\overline{\mathbf{B}} = Aff\_row\left(\overline{\mathbf{B}}, \overline{c} \otimes \overline{\mathbf{t}_i}; \overline{k}\right)$$

affectant de manière aveugle le vecteur $\overline{c} \otimes \overline{t_i}$ à la $k^{ème}$ ligne de $\overline{\mathbf{B}}$, où $\overline{t_i}$ est un vecteur-ligne de $\overline{T}$ représentant un $i^{ème}$ enregistrement balayé et $\overline{c}$ est un booléen chiffré.

L'opération d'affectation d'un vecteur $\overline{\mathbf{u}}$ de $P$ élément chiffrés à la $k^{ème}$ ligne d'une matrice $\overline{H} = (\overline{h_{ij}})$ d'éléments chiffrés de taille $KxP$ donne une matrice $\overline{G} = (\overline{g_{ij}})$ d'éléments chiffrés, de même taille, telle que $Dec(\overline{g_{ij}}) = Dec(\overline{h_{ij}})$ $\forall i \neq k$ et $Dec(\overline{g_{kj}}) = Dec(\overline{u_j})$, $1 \leq j \leq P$.

Le booléen chiffré peut être calculé au moyen de $\overline{c} = \overline{r_i} \otimes (\overline{n_{last} < i_{dx}}) \otimes (\overline{i_{dx} \leq n_{last} + K})$ où $\overline{r_i}$ est la valeur booléenne chiffrée du prédicat pour le $i^{ème}$ enregistrement balayé, $\overline{i_{dx}}$ une variable chiffrée donnant le nombre d'enregistrements déjà balayés satisfaisant au prédicat, $n_{last} = (m$ - 1$) K$ où $m$ -1 est le nombre de conteneur déjà transmis par le serveur à l'utilisateur et $\overline{n_{last}}$, $\overline{n_{last} + K}$ des chiffrés respectifs de $n_{last}$ et $n_{last} + K$.

La variable chiffrée $\overline{i_{dx}}$ est avantageusement mise à jour à chaque enregistrement balayé par $\overline{i_{dx}} = \overline{i_{dx}} + \overline{r_i}$.

L'indice chiffré $\overline{k}$ de la ligne de la matrice $\overline{\mathbf{B}}$ est quant à lui mis à jour à chaque enregistrement balayé par $\overline{k} = \overline{k} + \overline{c}$.

Selon une variante, la base de données est partitionnée en portions de taille $N / L$ à l'exception éventuellement d'une portion, les étapes (c),(d),(e), (f1)-(f2) étant effectuées, en série ou en parallèle, sur chacune desdites portions de la base.

La méthode de chiffrement totalement homomorphe peut utiliser par exemple un cryptosystème de Brakerski.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 illustre de manière schématique la mise en œuvre d'une méthode d'interrogation confidentielle selon un mode de réalisation de l'invention ;

La Fig. 2 représente un ordinogramme de la construction des conteneurs pour la méthode d'interrogation confidentielle selon un mode de réalisation de l'invention ;

La Fig. 3 représente de manière schématique un ordinogramme de la méthode d'interrogation confidentielle d'une base de données selon un mode de réalisation de l'invention.

## EXPOSÉ DÉTAILLÉ DE MODES DE RÉALISATION PARTICULIERS

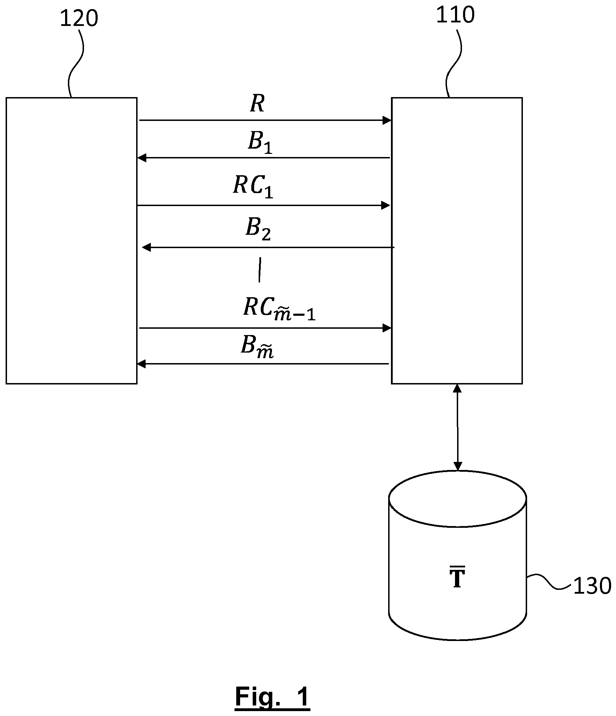

La méthode d'interrogation confidentielle d'une base de données, chiffrée par chiffrement totalement homomorphe voire partiellement homomorphe, selon la présente invention sera décrite ci-après dans le contexte d'une architecture client-serveur illustrée en Fig. 1.

Sans perte de généralité, on supposera dans la suite de la description que la méthode de chiffrement est totalement homomorphe. On comprendra en effet que l'on pourra toujours choisir une méthode de chiffrement partiellement homomorphe dans la mesure où celle-ci permet de calculer des combinaisons d'opérations de multiplication et d'addition sur des clairs avec la profondeur suffisante.

On a représenté en 110 un serveur, par exemple un serveur de fournisseur de service d'informatique en nuage. Ce serveur héberge une base de données 130, par exemple une base de données relationnelle. On supposera en tout état de cause que la base de données comprend une table $\overline{\overline{T}}$ (par exemple une relation dans une base de données relationnelle) constituée par $N$ enregistrements chiffrés. Plus précisément, chaque enregistrement comporte $P$ champs et chaque champ est chiffré au moyen d'un cryptosystème totalement homomorphe comme expliqué ci-après. Chaque enregistrement peut donc être considéré comme un $P$-uple de valeurs chiffrées ou de manière équivalente comme un vecteur de taille $P$ dont les éléments sont chiffrés. De manière similaire, la table $\overline{\overline{T}}$ peut être considérée comme une matrice de taille $N \times P$ d'éléments chiffrés, les lignes correspondant aux différents enregistrements et les colonnes aux différents champs.

Sans perte de généralité, on supposera dans la suite que la valeur en clair, $A$, d'un champ peut être représentée

$$A = \sum_{q=0}^{Q-1} a_q 2^q ,$$

par un mot de $Q$ bits, autrement dit : l'espace des clairs étant constitué des valeurs binaires $\{0,1\}$, autrement dit $X = \mathbf{Z}/2\mathbf{Z}$. Chaque bit $a_q$ est chiffré au moyen du cryptosystème totalement homomorphe précité, par exemple le cryptosystème de Brakerski dont on trouvera une description dans l'article de Z. Brakerski et al. intitulé « (Leveled) fully homomorphic encryption without bootstrapping » publié dans Proc. of ITCS 2012, pp. 309-325. La valeur chiffrée $\overline{a_q} = Enc(a_q)$ est un mot binaire et l'on notera $\overline{A}$ la séquence des mots $\overline{a_q}$, $q=0,..,Q-1$, autrement dit :

$$\overline{A} \equiv \overline{a_0}, \overline{a_1}, ..., \overline{a_{Q-1}} \tag{4}$$

$\overline{A}$ sera dénommé par abus de langage « chiffré » de $A$.

De la même façon, on notera réciproquement $Dec(\overline{A})$, le mot de $Q$ bits défini par :

$$Dec\left(\overline{A}\right) = \sum_{q=0}^{Q-1} Dec\left(\overline{a_q}\right) 2^q \tag{5}$$

$Dec(\overline{A})$ sera dénommé par abus de langage « déchiffré » de $\overline{A}$.

Revenant à la Fig. 1, un utilisateur transmet au serveur une requête, $R$, par exemple une requête SQL (*Structured Query Language*) comportant de manière générale un prédicat, c'est-à-dire une expression logique portant sur un ou plusieurs champ(s) de la table $\overline{\overline{T}}$ et pouvant prendre, selon les enregistrements, une valeur vraie (TRUE) ou fausse (FALSE). Le prédicat peut comprendre des opérateurs booléens AND, OR, NOT et/ou des opérateurs de comparaison ($<, \leq, >, \geq$) ou encore un opérateur d'égalité (==).

Le serveur évalue le prédicat (c'est-à-dire calcule sa valeur logique) sur les différents enregistrements de la table $\overline{\overline{T}}$ et forme un vecteur $\overline{r}$ de taille $N$ dont les éléments sont des booléens représentant les valeurs logiques ainsi obtenues. Il est essentiel de noter que l'évaluation du prédicat est effectuée sur des chiffrés et non sur des clairs, et que les booléens donnant les valeurs logiques des différents enregistrements sont également chiffrés. En d'autres termes, le serveur ne peut distinguer dans la table les enregistrements correspondant à une valeur vraie et ceux correspondant à une valeur fausse du prédicat. Notons que le serveur n'a pas davantage accès au nombre de résultats, c'est-à-dire au nombre d'enregistrements $M$ donnant lieu à une valeur vraie du prédicat.

La méthode d'interrogation confidentielle selon l'invention met en œuvre un conteneur, également dénommé seau (*bucket*), de taille fixe, pouvant contenir jusqu'à $K$ enregistrements, au moyen duquel les résultats de la requête sont retournés à l'utilisateur. Plus précisément, le serveur passe en revue tous les enregistrements de la table et transfère à l'aveugle dans le conteneur ceux qui satisfont à la requête, c'est-à-dire ceux pour lesquels la valeur du prédicat est vraie. Le transfert à l'aveugle est effectué au moyen d'une opération d'affectation détaillée plus loin. Elle garantit que le serveur (ou un tiers malveillant effectuant une attaque sur le serveur) ne puisse déterminer les enregistrements effectivement transférés dans le conteneur. Les emplacements du conteneur dans lesquels un enregistrement n'a pas été transféré contiennent des valeurs chiffrées $\overline{0}$ (indiquant conventionnellement que l'emplacement est vide).

La réponse du serveur à l'utilisateur est répartie sur un nombre $\tilde{m}$ de conteneurs, $B_1,...,B_{\tilde{m}}$ où $\tilde{m} = \lceil M/K \rceil$ est la partie entière par excès de la fraction $M/K$. Le serveur ne peut déterminer à l'avance le nombre $\tilde{m}$ de conteneurs puisque le nombre $M$ de résultats ne lui est pas révélé. Pour chaque conteneur $B_m$ reçu, l'utilisateur déchiffre le contenu des différents emplacements du conteneur. Si l'utilisateur arrive à un emplacement ne contenant que des $\overline{0}$ celui-ci sait alors qu'il a obtenu tous les résultats. A défaut, si un tel emplacement n'est pas détecté, l'utilisateur renvoie au serveur une requête de continuation, $RC_m$. Le transfert des résultats se fait ainsi par passage de conteneurs (ou seaux) sur demande de l'utilisateur. Au final, le serveur connait indirectement le nombre de conteneurs transférés pour une requête c'est-à-dire la valeur $\tilde{m}$ mais ne connait le nombre de résultats qu'à un nombre $K$ - 1 d'enregistrements près.

On a représenté sur la figure, la requête initiale R de l'utilisateur et ses requêtes de continuation $RC_m$, $m=1,...,\tilde{m}$-1 successives. En réponse aux requêtes $R,RC_1,...,RC_{\tilde{m}-1}$ le serveur transmet respectivement les conteneurs $B_m$, $m=1,..,\tilde{m}$, comme expliqué ci-après.

En réponse à la requête $R$ de l'utilisateur, le serveur évalue le prédicat sur chacun des enregistrements de la table $\overline{T}$. Cette évaluation se fait bien entendu sur les valeurs chiffrées. Par exemple, si la requête consiste à obtenir tous les enregistrements tels que le contenu $\overline{F}$ d'un champ est égal à une valeur chiffrée donnée $\overline{D}$, c'est-à-dire si le prédicat est $\overline{F} = \overline{D}$, où $\overline{f_{Q-1}}\cdots\overline{f_1}\overline{f_0}$ et $\overline{d_{Q-1}}\cdots\overline{d_1}\overline{d_0}$ sont les représentations binaires respectives de $\overline{F}$ et $\overline{D}$, on aura :

$$\left(\overline{F} == \overline{D}\right) = \overset{Q-1}{\underset{q=0}{\otimes}}\left(\overline{1} \oplus \overline{f_q} \oplus \overline{d_q}\right) \tag{6}$$

Autrement dit, l'évaluation du prédicat $(\overline{F} = \overline{D})$ donne une valeur booléenne chiffrée égale à $\overline{1}$ (valeur logique TRUE) si le champ $\overline{F}$ de l'enregistrement est égal à $\overline{D}$ et égale à $\overline{0}$ (valeur logique FALSE) dans le cas contraire.

D'autres prédicats mettant en œuvre des opérateurs de comparaison et/ou des opérateurs arithmétiques ($\oplus$ et $\otimes$) pourront être utilisés. De manière générale, la valeur logique d'un prédicat peut être obtenue à partir d'opérations $\oplus$ et $\otimes$ sur les éléments chiffrés d'un enregistrement. On trouvera par exemple le calcul d'un prédicat de comparaison dans l'article de M. Mani *et al.* précité.

En tout état de cause, le serveur évalue le prédicat sur chaque enregistrement $i=1,...,N$ de la table et en déduit un vecteur $\overline{r}$ de taille $N$ dont les éléments $\overline{r_i}$ sont les résultats de cette évaluation.

On définit ensuite un opérateur d'affectation conditionnelle *Sel* permettant d'affecter un premier mot chiffré $\overline{A}$ ou un second mot chiffré $\overline{B}$ à une variable $\overline{V}$ selon la valeur d'un booléen chiffré $\overline{c}$, de la manière suivante :

$$\overline{V} = Sel\left(\overline{A}, \overline{B}; \overline{c}\right)$$

$$\overline{v_q} = \left(\overline{c} \otimes \overline{a_q}\right) \oplus \left(\left(\overline{1} \oplus \overline{c}\right) \otimes \overline{b_q}\right), \quad q=0,...,Q-1 \tag{7}$$

On comprend de l'expression (7) que le mot chiffré $\overline{A}$ est assigné à $\overline{V}$ si $\overline{c}$ est un chiffré de 1 et que le mot chiffré $\overline{B}$ est assigné à $\overline{V}$ si $\overline{c}$ est un chiffré de 0. Il est essentiel de noter que cette affectation est réalisée de manière aveugle, c'est-à-dire que le serveur calculant l'expression (7) n'a aucun moyen de déterminer lequel des mots $\overline{A}$ et $\overline{B}$ est effectivement assigné à $\overline{V}$. En effet, en l'absence de la clé de déchiffrement, le serveur ne sait pas si $\overline{c}$ est un chiffré de 1 ou 0. En outre, le mot chiffré assigné étant modifié par le calcul de l'expression (7), il n'est pas possible de déduire cette affectation d'une simple comparaison de $\overline{V}$ avec $\overline{A}$ et $\overline{B}$.

L'opérateur d'affectation *Sel* permet d'affecter de manière aveugle une valeur chiffrée à un élément d'un vecteur. Plus précisément, si l'on note $\overline{\mathbf{v}} = (\overline{v_1},....,\overline{v_P})$ un vecteur de chiffrés et $\overline{k}$ le chiffré d'un indice $k$, $1 \leq k \leq P$, on peut assigner de manière aveugle une valeur chiffrée $\overline{u}$ à l'élément d'indice $k$ du vecteur $\overline{\mathbf{v}}$ pour générer un nouveau vecteur $\overline{\mathbf{w}} = (\overline{w_1},...,\overline{w_P})$, tel que :

$$Dec(\overline{w_i}) = Dec\left(\overline{v_i}\right), \; \forall i \neq k \; \text{ et } \; Dec(\overline{w_k}) = Dec\left(\overline{u}\right) \tag{8}$$

Cette assignation peut être avantageusement obtenue au moyen de :

$$\overline{w_i} = Sel\left(\overline{v_i}, \overline{u}; \left(\overline{i} == \overline{k}\right)\right), \quad i = 1, ..., P \tag{9}$$

L'indice $\overline{k}$ étant chiffré, le serveur effectuant le calcul de l'expression (9) ne saura pas déterminer à quel élément du vecteur **v** le mot chiffré $\overline{u}$ aura été assigné. En outre, le déchiffrement des éléments du vecteur **w** fournira les mêmes éléments déchiffrés que pour le vecteur **v**, hormis le déchiffrement de l'élément d'indice $k$ qui donnera le mot $u$. Il convient de noter que le calcul de l'expression (9) requiert simplement de connaître la clé (publique) de chiffrement pour obtenir les indices chiffrés $\overline{i}$, $\overline{i}$ = 1,...,P.

Selon le même principe, il est possible d'affecter de manière aveugle un mot chiffré $\overline{u}$ à un élément quelconque d'indices $k, \ell$ dans une matrice $\overline{\mathbf{H}}$ (de taille $K \times P$) de chiffrés $\overline{\mathbf{H}} = (\overline{h_{ij}})$, $1 \le i \le K$, $1 \le j \le P$ pour obtenir une matrice de même taille $\overline{\mathbf{G}} = (\overline{g_{ij}})$, $1 \le i \le K$, $1 \le j \le P$:

$$\overline{g_{ij}} = Sel\left(\overline{h_{ij}}, \overline{u}; \left(\overline{i} == \overline{k}\right) \otimes \left(\overline{j} == \overline{\ell}\right)\right) \tag{10}$$

La matrice $\overline{\mathbf{G}}$ vérifie alors :

$$Dec\left(\overline{g_{ij}}\right) = Dec\left(\overline{h_{ij}}\right) \quad \forall (i, j) \ne (k, \ell) \quad \text{et} \quad Dec\left(\overline{g_{k\ell}}\right) = Dec\left(\overline{u}\right) \tag{11}$$

Autrement dit, le déchiffrement des éléments de la matrice $\overline{\mathbf{G}}$ fournira les mêmes éléments déchiffrés que pour la matrice $\overline{\mathbf{H}}$, hormis le déchiffrement de l'élément d'indices $k, \ell$ qui donnera le mot $u$. L'expression d'affectation (10) sera notée dans la suite de manière plus compacte :

$$\overline{\mathbf{G}} = Aff\left(\overline{\mathbf{H}}, \overline{u}; \left(\overline{k}, \overline{\ell}\right)\right) \tag{12}$$

L'affectation peut concerner une ligne entière ou une colonne entière de la matrice $\overline{\mathbf{H}}$. Par exemple, si l'on note $\overline{\mathbf{u}} = (\overline{u}_1, ..., u_P)$ un vecteur de mots chiffrés à affecter respectivement aux $P$ éléments de la $k^{\text{ième}}$ ligne de la matrice $\overline{\mathbf{H}}$, on peut définir une nouvelle matrice $\overline{\mathbf{G}}$ :

$$\overline{g_{ij}} = Sel\left(\overline{h_{ij}}, \overline{u_j}; \left(\overline{i} == \overline{k}\right)\right) \quad 1 \le i \le K, \; 1 \le j \le P \tag{13}$$

Là encore, l'indice $\overline{k}$ étant chiffré, le processeur effectuant le calcul de l'expression (13) ne sait pas quelle ligne de la matrice a fait l'objet d'une assignation et le déchiffrement donne :

$$Dec\left(\overline{g_{ij}}\right) = Dec\left(\overline{h_{ij}}\right) \quad \forall i \ne k \quad \text{et} \quad Dec\left(\overline{g_{kj}}\right) = Dec\left(\overline{u_j}\right), \; 1 \le j \le P \tag{14}$$

Autrement dit, le déchiffrement des éléments de la matrice $\overline{\mathbf{G}}$ fournira les mêmes éléments déchiffrés que pour la matrice **H**, hormis le déchiffrement des éléments de la ligne $k$ qui redonneront les éléments du vecteur $\overline{\mathbf{u}}$. L'expression (14) sera notée dans la suite de manière plus compacte :

$$\overline{\mathbf{G}} = Aff\_row\left(\overline{\mathbf{H}}, \overline{\mathbf{u}}; \overline{k}\right) \tag{15}$$

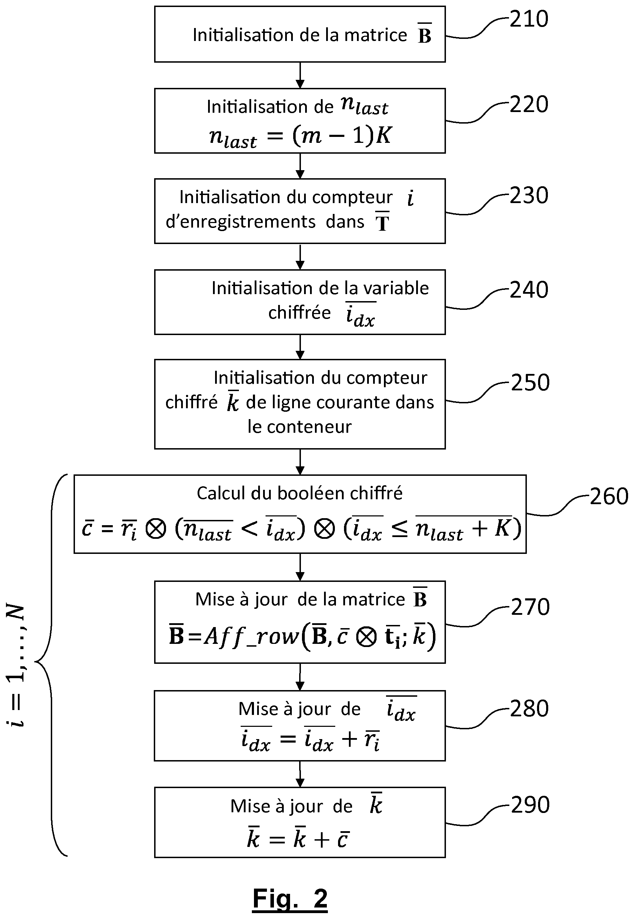

L'opération d'affectation *Aff_row* permet au serveur d'extraire à l'aveugle les enregistrements satisfaisant à la requête de l'utilisateur et de les charger dans des conteneurs successifs comme expliqué en relation avec la Fig. 2.

On suppose dans cette figure que le serveur a reçu une requête de continuation $RC_m$ de la part de l'utilisateur et qu'il doit donc construire le conteneur $B_m$.

Ce conteneur peut être considéré comme une matrice $\overline{\mathbf{B}}$ de taille $K \times P$. On rappelle ici que $K$ est le nombre d'enregistrements pouvant être stockés dans le conteneur et $P$ le nombre de champs. On rappelle également que la table des enregistrements peut être considérée comme une matrice $\overline{\mathbf{T}}$ de taille $N \times P$ : $\overline{\mathbf{T}} = (t_{ij})$, $i$=1....,N, $j$=1,...,P. On suppose que $K < N$, voire $K \ll N$.

A l'étape 210, la matrice $\overline{\mathbf{B}}$ est initialisée par la matrice $\mathbf{0}_{K \times P}$ dont tous les éléments sont nuls.

A l'étape 220, on détermine $n_{last} = (m - 1).K$ l'indice du dernier enregistrement transmis à l'utilisateur. Le serveur sait en effet qu'il a déjà renvoyé à l'utilisateur $n_{last}$ enregistrements satisfaisant à la requête. Il faut noter en revanche que le serveur ne sait pas où se trouve ce dernier enregistrement dans la table $\overline{\mathbf{T}}$.

A l'étape 230, on initialise un compteur d'enregistrements dans la table $\overline{\mathbf{T}}$, soit $i = 1$. On notera que ce compteur est en clair. Il sert à balayer les enregistrements successifs de la table.

A l'étape 240, le serveur initialise une variable $\overline{i_{dx}}$ donnant le nombre d'enregistrements balayés satisfaisant au prédicat, soit $\overline{i_{dx}} = \overline{0}$. On notera que cette variable est chiffrée mais que sa valeur initiale nulle est connue du serveur.

A l'étape 250, le serveur initialise un compteur $\overline{k}$ pointant vers la ligne courante du conteneur, $\overline{k} = \overline{1}$. Là encore, le compteur est chiffré mais sa valeur initiale est connue du serveur.

On balaie ensuite l'intégralité des enregistrements de la table $\overline{\mathbf{T}}$, c'est-à-dire que l'on entre dans une boucle dans laquelle on répète les étapes suivantes pour i allant de 1 à $N$ :

A l'étape 260, on calcule le booléen chiffré :

$$\overline{c} = \overline{r_i} \otimes \left(\overline{n_{last} < i_{dx}}\right) \otimes \left(\overline{i_{dx} \leq n_{last} + K}\right) \tag{16}$$

Autrement dit, on détermine de manière aveugle si le $i^{\text{ème}}$ enregistrement de la table $\overline{\mathbf{T}}$ satisfait à la requête (terme $\overline{r_i}$), et s'il fait bien partie des $n_{last}$ +1 à $n_{last} + K$ enregistrements pouvant être transférés dans le conteneur courant (terme $(\overline{n_{last} < i_{dx}}) \otimes (\overline{i_{dx} \leq n_{last} + K})$). Ce dernier test est nécessaire dans la mesure où l'on balaie l'entièreté de la table de manière aveugle.

A l'étape 270, on transfère le $i^{\text{ème}}$ enregistrement de la table $\overline{\mathbf{T}}$ au $k^{\text{ème}}$ emplacement du conteneur, en mettant à jour la matrice $\overline{\mathbf{B}}$ au moyen de l'opération d'affectation :

$$\overline{\mathbf{B}} = Aff\_row\left(\overline{\mathbf{B}}, \overline{c} \otimes \overline{\mathbf{t_i}}; \overline{k}\right) \tag{17}$$

où l'on a noté $\overline{\mathbf{t_i}}$ le vecteur de taille $P$ représentant le $i^{\text{ème}}$ enregistrement de la table $\overline{\mathbf{T}}$ et où $\overline{c} \otimes \overline{\mathbf{t_i}}$ est le vecteur défini par :

$$\overline{c} \otimes \overline{\mathbf{t_i}} = \left(\overline{c} \otimes t_{i1}, \dots, \overline{c} \otimes t_{iP}\right) \tag{18}$$

A l'étape 280, on met à jour le nombre d'enregistrements balayés satisfaisant à la requête, soit :

$$\overline{i_{dx}} = \overline{i_{dx}} + \overline{r_i} \tag{19}$$

A l'étape 290, on met à jour le pointeur de ligne dans le conteneur par :

$$\overline{k} = \overline{k} + \overline{c} \tag{20}$$

Autrement dit, on n'incrémente (de manière cachée) l'indice $k$ que dans la mesure où le $i^{\text{ème}}$ enregistrement est à la fois un enregistrement satisfaisant à la requête et est destiné à être stocké dans le conteneur courant.

Un exemple numérique est donné ci-après pour illustrer la procédure de construction des conteneurs. La requête $R$ de l'utilisateur consiste ici à extraire tous les enregistrements de la base commençant par l'octet (chiffré) $\overline{192}$.

On suppose que la table $\overline{\mathbf{T}}$ est constituée de cinq enregistrements composés de quatre champs, soit :

| i/p | 1 | 2 | 3 | 4 | $\overline{r_i}$ | $\overline{i_{dx}}$ |
|-----|-----|-----|-----|-----|-----|-----|
| 1 | $\overline{192}$ | $\overline{168}$ | $\overline{132}$ | $\overline{20}$ | $\overline{1}$ | $\overline{1}$ |
| 2 | $\overline{201}$ | $\overline{141}$ | $\overline{32}$ | $\overline{1}$ | $\overline{0}$ | $\overline{1}$ |
| 3 | $\overline{192}$ | $\overline{168}$ | $\overline{201}$ | $\overline{20}$ | $\overline{1}$ | $\overline{2}$ |
| 4 | $\overline{121}$ | $\overline{42}$ | $\overline{2}$ | $\overline{255}$ | $\overline{0}$ | $\overline{2}$ |
| 5 | $\overline{192}$ | $\overline{178}$ | $\overline{101}$ | $\overline{2}$ | $\overline{1}$ | $\overline{3}$ |

La première colonne du tableau fournit les indices des enregistrements, l'avant-dernière contient les booléens chiffrés $\overline{r_i}$ et la dernière les booléens chiffrés $\overline{i_{dx}}$.

On suppose que le conteneur est de taille $K = 2$. Dans ce cas, le premier conteneur renvoyé par le serveur est le suivant :

| | | | |
|---|---|---|---|
| $\overline{192}$ | $\overline{168}$ | $\overline{132}$ | $\overline{20}$ |
| $\overline{192}$ | $\overline{168}$ | $\overline{201}$ | $\overline{20}$ |

Sur réception de ce conteneur, l'utilisateur déchiffre les (champs des) différents enregistrements qui y sont stockés. L'utilisateur ne détectant pas de ligne nulle transmet une première requête de continuation $RC_1$ au serveur. Celui-ci balaie à nouveau les cinq enregistrements de la table et ne transfère dans le second conteneur que ceux qui n'ont pas déjà été stockés dans le premier. Le serveur construit alors le second conteneur :

| | | | |
|---|---|---|---|
| $\overline{192}$ | $\overline{178}$ | $\overline{101}$ | $\overline{2}$ |
| $\overline{0}$ | $\overline{0}$ | $\overline{0}$ | $\overline{0}$ |

L'utilisateur déchiffre les (champs des) différents enregistrements et détecte la présence d'une ligne nulle, c'est-à-dire ne comprenant que des valeurs nulles chiffrées. Il en déduit que tous les enregistrements satisfaisant à la requête lui ont déjà été transmis.

On comprend que la méthode de construction de conteneurs décrite ci-dessus garantit que le serveur n'a accès qu'à un majorant du nombre de résultats ($\tilde{m}K$). La taille $K$ du conteneur est un compromis entre le degré d'ambiguïté acceptable sur le nombre de résultats, d'une part, et le besoin en ressources de communication (entre l'utilisateur et le serveur), d'autre part. En effet, une solution triviale, mais sans intérêt, serait de choisir $K = N$, c'est-à-dire de charger l'intégralité de la table $\overline{\overline{T}}$ dans le conteneur. L'ambiguïté sur le nombre de résultats serait alors maximale mais le nombre d'enregistrements transmis inutilement serait également maximal ($N - M$). En revanche, pour une faible taille $K$ du conteneur, l'ambiguïté sur le nombre de résultats serait moindre mais le nombre d'enregistrements inutilement transmis serait également plus faible ($\tilde{m}K - M$).

On a déjà remarqué plus haut que la construction de chaque conteneur nécessitait de balayer l'intégralité de la table $\overline{\overline{T}}$. Afin de simplifier les calculs, on peut partitionner la table en $L$ portions de taille égale à $N/L$ (hormis la dernière portion de taille $N - \lfloor N/L \rfloor \cdot L$), la procédure d'extraction étant appliquée à chaque portion de la table. La complexité de construction d'un conteneur est ainsi réduite d'un facteur $L$. En contrepartie, le transfert de résultats mobilise au moins $L$ fois plus de ressources de communication dans la mesure où les $L$ portions de la table seront au moins balayées chacune une fois. En définitive, le choix de la taille $K$ du conteneur et du facteur de partition $L$ résulte d'un compromis entre le degré d'ambiguïté requis, les ressources de calcul et les ressources de communication disponibles.

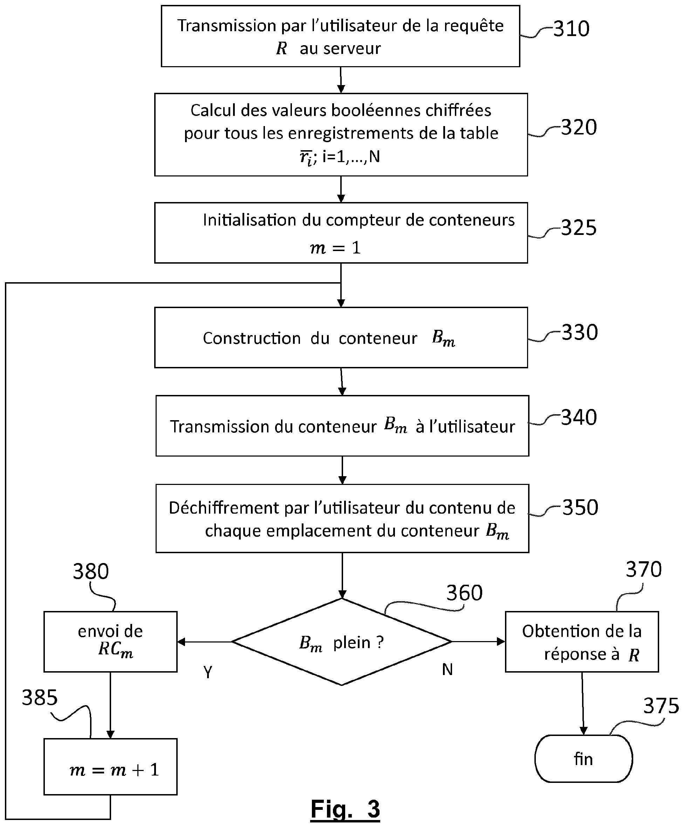

On a schématiquement représenté en Fig. 3 un ordinogramme d'une méthode d'interrogation confidentielle d'une base de données selon un mode de réalisation de l'invention.

Les échanges entre l'utilisateur (client) et le serveur (du fournisseur de service) sont ceux déjà illustrés en Fig. 1.

A l'étape 310, l'utilisateur transmet une requête ($R$), comprenant un prédicat, au serveur.

A l'étape 320, le serveur calcule la valeur booléenne chiffrée du prédicat pour chaque enregistrement de la table $\overline{\overline{T}}$, autrement dit calcule les valeurs $\overline{r_i}$, $i = 1,...N$.

A l'étape 325, l'indice du conteneur est initialisé, soit $m = 1$.

A l'étape 330, le serveur construit un conteneur $B_m$ comprenant un nombre prédéterminé $K$ d'emplacements et stocke à l'aveugle à ces emplacements les enregistrements vérifiant le prédicat et non déjà transmis à l'utilisateur. La construction du conteneur est effectuée comme expliqué précédemment en relation avec la Fig. 2.

A l'étape 340, le serveur transmet à l'utilisateur le conteneur $B_m$.

A l'étape 350, l'utilisateur déchiffre le contenu de chaque emplacement du conteneur $B_m$, autrement dit chaque élément de la matrice $\overline{\overline{B}}$.

A l'étape 360, l'utilisateur détermine si une ligne nulle est présente ou non dans le conteneur $B_m$. Il en déduit ainsi que le conteneur est plein ou non.

Si une telle ligne est détectée, l'utilisateur en déduit qu'il a reçu tous les enregistrements satisfaisant à la requête. En effet, on comprendra que le dernier conteneur $B_{\tilde{m}}$ comporte $K - (M - \tilde{m}K)$ lignes nulles alors que les conteneurs précédents $B_m$, $m = 1,....,\tilde{m}-1$ n'en comportent pas. L'utilisateur obtient en 370 la réponse à la requête $R$ à partir des enregistrements stockés dans les conteneurs $B_m$, $m=1,....,\tilde{m}$, précédemment déchiffrés à l'étape 350. Le traitement de la requête s'achève en 375.

A l'inverse, si l'utilisateur ne détecte une telle ligne nulle après déchiffrement, il transmet au serveur une requête

en continuation $RC_m$ en 380 et incrémente l'indice du conteneur, $m$, en 385 avant de retourner à l'étape 330.

**Revendications**

1. Méthode d'interrogation confidentielle d'une base de données hébergée par un serveur, la base de données contenant une table d'enregistrements, chaque enregistrement étant obtenu au moyen d'un chiffrement totalement homomorphe voire partiellement homomorphe de valeurs en clair, dans laquelle :

   (a) l'utilisateur transmet (310) une requête ($R$), comprenant un prédicat au serveur, ledit prédicat étant une expression logique portant sur un ou plusieurs champs de la table d'enregistrements ;
   (b) le serveur (320) calcule la valeur booléenne chiffrée du prédicat pour chaque enregistrement de la table ;

   **caractérisée en ce que** :

   (c) le serveur (330) construit un conteneur ($B_m$) comprenant un nombre prédéterminé ($K$) d'emplacements et stocke à l'aveugle aux dits emplacements des enregistrements vérifiant le prédicat et non déjà transmis à l'utilisateur, à partir des valeurs booléennes chiffrées ($\overline{r_i}$, i =1,...,$N$) obtenues à l'étape (b);
   (d) le serveur transmet (340) à l'utilisateur le conteneur ainsi construit ;
   (e) l'utilisateur reçoit le conteneur, déchiffre le contenu de chaque emplacement(350), et détermine si le conteneur est plein ou non (360);
   (f1) si le conteneur est plein, l'utilisateur transmet (380) une requête de continuation ($RC_m$) au serveur pour une nouvelle itération des étapes (c),(d) et (e) ;
   (f2) si le conteneur n'est pas plein, l'utilisateur obtient la réponse à ladite requête (370) à partir des enregistrements stockés dans les conteneurs reçus et déchiffrés à l'étape ou aux étapes (e).

2. Méthode d'interrogation confidentielle d'une base de données selon la revendication 1, **caractérisée en ce que** la table d'enregistrements est représentée par une matrice $\overline{T}$ de taille $N \times P$ où $N$ est le nombre d'enregistrements de la table et $P$ le nombre de champs de ces enregistrements, un élément chiffré $\overline{A}$ de la matrice étant obtenu à

$$A = \sum_{q=0}^{Q-1} a_q 2^q$$

   partir de sa valeur en clair par $\overline{A} \equiv \overline{a_0}, \overline{a_1}, ..., \overline{a_{Q-1}}$ où $a_q$, $q=0,...,Q$-1 sont les bits de la valeur en clair et $\overline{a_q}$, $q=0,...,Q$-1 sont leurs chiffrés correspondants, obtenus par ledit chiffrement totalement homomorphe voire partiellement homomorphe.

3. Méthode d'interrogation confidentielle d'une base de données selon la revendication 2 **caractérisée en ce que** le prédicat est évalué sur les différents enregistrements au moyen d'opérations additives $\oplus$ et multiplicatives $\otimes$ portant sur les éléments chiffrés.

4. Méthode d'interrogation confidentielle d'une base de données selon la revendication 3, **caractérisée en ce que** le conteneur est représenté par une matrice $\overline{B}$ de taille $K \times P$ avec $K < N$, le serveur construisant la matrice $\overline{B}$ en initialisant les éléments de cette matrice à zéro et en mettant à jour les lignes de cette matrice de manière itérative en balayant tous les enregistrements de la table d'enregistrements, ladite mise à jour étant effectué au moyen d'une opération d'affectation :

$$\overline{\mathbf{B}} = Aff\_row\left(\overline{\mathbf{B}}, \overline{c} \otimes \overline{\mathbf{t}_i}; \overline{k}\right)$$

   affectant de manière aveugle le vecteur $\overline{c} \otimes \overline{t_i}$ à la $k^{ème}$ ligne de $\overline{B}$, où $\overline{t_i}$ est un vecteur-ligne de $\overline{T}$ représentant un $i^{ème}$ enregistrement balayé et $\overline{c}$ est un booléen chiffré.

5. Méthode d'interrogation confidentielle d'une base de données selon la revendication 4, **caractérisée en ce que** l'opération d'affectation d'un vecteur $\overline{u}$ de $P$ élément chiffrés à la $k^{ème}$ ligne d'une matrice $\overline{H} = (\overline{h_{ij}})$ d'éléments chiffrés de taille $K \times P$ donne une matrice $\overline{G} = (g_{ij})$ d'éléments chiffrés, de même taille, telle que $Dec(\overline{g_{ij}}) = Dec(\overline{h_{ij}})$ $\forall i \neq k$ et $Dec(\overline{g_{kj}}) = Dec(\overline{u_j})$, $1 \leq j \leq P$.

6. Méthode d'interrogation confidentielle d'une base de données selon la revendication 4 ou 5, **caractérisée en ce que** le booléen chiffré est calculé au moyen de $\overline{c} = \overline{r_i} \otimes (\overline{n_{last}} < \overline{i_{dx}}) \otimes (\overline{i_{dx}} \le \overline{n_{last} + K})$ où $\overline{r_i}$ est la valeur booléenne chiffrée du prédicat pour le $i^{\text{ème}}$ enregistrement balayé, $\overline{i_{dx}}$ une variable chiffrée donnant le nombre d'enregistrements déjà balayés satisfaisant au prédicat, $n_{last} = (m\text{-}1)K$ où $m$ -1 est le nombre de conteneur déjà transmis par le serveur à l'utilisateur et $\overline{n_{last}}, \overline{n_{last} + K}$ des chiffrés respectifs de $n_{last}$ et $n_{last} + K$.

7. Méthode d'interrogation confidentielle d'une base de données selon la revendication 6, **caractérisée en ce que** la variable chiffrée $\overline{i_{dx}}$ est mise à jour à chaque enregistrement balayé par $\overline{i_{dx}} = \overline{i_{dx}} + \overline{r_i}$.

8. Méthode d'interrogation confidentielle d'une base de données selon la revendication 6 ou 7, **caractérisée en ce que** l'indice chiffré $\overline{k}$ de la ligne de la matrice $\overline{B}$ est mis à jour à chaque enregistrement balayé par $\overline{k} = \overline{k} + \overline{c}$.

9. Méthode d'interrogation confidentielle d'une base de données selon l'une quelconque des revendications précédentes, **caractérisée en ce que** la base de données est partitionnée en portions de taille $N/L$ à l'exception éventuellement d'une portion, les étapes (c),(d),(e), (f1)-(f2) étant effectuées, en série ou en parallèle, sur chacune desdites portions de la base.

10. Méthode d'interrogation confidentielle d'une base de données selon l'une quelconque des revendications précédentes, **caractérisée en ce que** la méthode de chiffrement totalement homomorphe utilise un cryptosystème de Brakerski.

## Patentansprüche

1. Verfahren zur vertraulichen Abfrage einer von einem Server gehosteten Datenbank, wobei die Datenbank eine Tabelle von Datensätzen enthält, wobei jeder Datensatz durch eine vollständig homomorphe bzw. teilweise homomorphe Verschlüsselung von Werten im Klartext erhalten wird, wobei:

(a) der Benutzer eine Anfrage ($R$), einschließlich eines Prädikats, an den Server überträgt (310), wobei das Prädikat ein logischer Ausdruck ist, der sich auf ein oder mehrere Felder der Datensatztabelle bezieht;
(b) der Server (320) den verschlüsselten booleschen Wert des Prädikats für jeden Datensatz der Tabelle berechnet;

**dadurch gekennzeichnet, dass**

(c) der Server (330) einen Container ($B_m$) konstruiert, der eine vorbestimmte Anzahl ($K$) von Stellen umfasst und an diesen Stellen blind Datensätze speichert, die das Prädikat bestätigen und nicht bereits an den Benutzer übertragen wurden, und zwar auf der Grundlage der in Schritt (b) erhaltenen verschlüsselten booleschen Werte ($\overline{r_l}$, i = 1, ..., N);
(d) der Server den so konstruierten Container an den Benutzer überträgt (340);
(e) der Benutzer den Container erhält, den Inhalt jeder Stelle (350) entschlüsselt und bestimmt, ob der Container voll ist oder nicht (360);
(f1) dann, wenn der Container voll ist, der Benutzer eine Fortsetzungsanfrage ($RC_m$) für eine neue Iteration der Schritte (c), (d) und (e) an den Server überträgt (380);
(f2) dann, wenn der Behälter nicht voll ist, der Benutzer die Antwort auf die genannte Anfrage ausgehend von den Datensätzen erhält (370), die in den in dem oder den Schritten (e) empfangenen und entschlüsselten Behältern gespeichert sind.

2. Verfahren zur vertraulichen Abfrage einer Datenbank nach Anspruch 1, **dadurch gekennzeichnet, dass** die Tabelle mit den Datensätzen durch eine Matrix $\overline{T}$ der Größe $N \times P$ dargestellt ist, wobei $N$ die Anzahl der Datensätze in der Tabelle und $P$ die Anzahl der Felder in diesen Datensätzen ist, wobei ein verschlüsseltes Element $\overline{A}$ der Matrix aus seinem Wert im Klartext $A = \sum_{q=0}^{Q-1} a_q 2^q$ durch $\overline{A} \equiv \overline{a_0}, \overline{a_1}, \dots, \overline{a_{Q-1}}$ erhalten wird, wobei $a_q$, $q = 0, ..., Q$ - 1 die Bits des Wertes im Klartext sind und $\overline{a_q}$, $q = 0, ... Q$ - 1 ihre entsprechenden Verschlüsselungen sind, die durch die genannte vollständig homomorphe bzw. teilweise homomorphe Verschlüsselung erhalten werden.

3. Verfahren zur vertraulichen Abfrage einer Datenbank nach Anspruch 2, **dadurch gekennzeichnet, dass** das Prädikat bei den verschiedenen Datensätzen mittels additiver $\oplus$ und multiplikativer $\otimes$ Operationen bezüglich der verschlüsselten Elemente ausgewertet wird.

4. Verfahren zur vertraulichen Abfrage einer Datenbank nach Anspruch 3, **dadurch gekennzeichnet, dass** der Container durch eine Matrix $\overline{B}$ der Größe $K \times P$ mit $K < N$ dargestellt ist, wobei der Server die Matrix $\overline{B}$ durch Zurücksetzen der Elemente dieser Matrix auf Null und iterative Aktualisierung der Zeilen dieser Matrix durch Abtasten aller Datensätze der Datensatztabelle aufbaut, wobei die Aktualisierung mittels einer Zuordnungsoperation durchgeführt wird

$$\overline{B} = Aff\_row\ (\overline{B}, \overline{c} \otimes \overline{t}_i; \overline{k})$$

indem der Vektor $\overline{c} \otimes \overline{t}_i$ blind der k-ten Zeile von $\overline{B}$ zugeordnet wird, wobei $\overline{t}_i$ ein Zeilenvektor von $\overline{T}$ ist, der einen i-ten abgetasteten Datensatz darstellt, und $\overline{c}$ ein verschlüsselter boolescher Wert ist.

5. Verfahren zur vertraulichen Abfrage einer Datenbank nach Anspruch 4, **dadurch gekennzeichnet, dass** die Operation der Zuordnung eines Vektors $\overline{u}$ von P verschlüsselten Elementen zur k-ten Zeile einer Matrix $\overline{H} = (\overline{h}_{i,j})$ von verschlüsselten Elementen der Größe $K \times P$ eine Matrix $\overline{G} = (\overline{g}_{i,j})$ von verschlüsselten Elementen derselben Größe ergibt, so dass $Dec\ (\overline{g}_{ij}) = Dec(h_{\overline{ij}})\ \forall i \neq k$ und $Dec\ (\overline{g}_{kj}) = Dec(\overline{u}_j)$, $1 \leq j \leq P$ ist.

6. Verfahren zur vertraulichen Abfrage einer Datenbank nach Anspruch 4 oder 5, **dadurch gekennzeichnet, dass** der verschlüsselte boolesche Wert mit Hilfe von $\overline{c} = \overline{r}_i \otimes (\overline{n_{last} < i_{dx}}) \otimes (\overline{i_{dx} \leq n_{last} + K})$ berechnet wird, wobei $\overline{r}_i$ der verschlüssele boolesche Wert des Prädikats für den i-ten abgetasteten Datensatz ist, $\overline{i_{dx}}$ eine verschlüssele Variable ist, die die Anzahl der bereits abgetasteten Datensätze angibt, die das Prädikat erfüllen, $n_{last} = (m - 1) K$ ist, wobei $m - 1$ die Anzahl der bereits vom Server an den Benutzer übertragenen Container ist und $\overline{n_{last}}, \overline{n_{last} + K}$ jeweilige Verschlüsselungen von $n_{last}$ und $n_{last} + K$ sind.

7. Verfahren zur vertraulichen Abfrage einer Datenbank nach Anspruch 6, **dadurch gekennzeichnet, dass** die verschlüsselte Variable $\overline{i_{dx}}$ bei jedem abgetasteten Datensatz durch $\overline{i_{dx}} = \overline{i_{dx}} + \overline{r}_i$ aktualisiert wird.

8. Verfahren zur vertraulichen Abfrage einer Datenbank nach Anspruch 6 oder 7, **dadurch gekennzeichnet, dass** der verschlüsselte Index $\overline{k}$ in der Zeile der Matrix $\overline{B}$ bei jedem abgetasteten Datensatz durch $\overline{k} = \overline{k} + \overline{c}$ aktualisiert wird.

9. Verfahren zur vertraulichen Abfrage einer Datenbank nach einem der vorangehenden Ansprüche, **dadurch gekennzeichnet, dass** die Datenbank in Teile der Größe N/L unterteilt wird, gegebenenfalls mit Ausnahme eines Teils, wobei die Schritte (c), (d), (e), (f1) - (f2) seriell oder parallel an jedem der genannten Teile der Datenbank ausgeführt werden.

10. Verfahren zur vertraulichen Abfrage einer Datenbank nach einem der vorangehenden Ansprüche, **dadurch gekennzeichnet, dass** das bei dem Verfahren zur vollständig homomorphen Verschlüsselung ein Brakerski-Kryptosystem verwendet wird.

## Claims

1. A method for confidentially querying a database hosted by a server, the database contains a table of records, each record being obtained by means of a totally or partially homomorphic encryption of plaintext values, in which:

   (a) the user transmits (310) a request (R), comprising a predicate to the server, said predicate being a logical expression applied to one or several fields of the table of records;
   (b) the server (320) calculates the encrypted Boolean value of the predicate for each record in the table;

   **characterized in that**:

   (c) the server (330) constructs a container ($B_m$) comprising a predetermined number (K) of locations and blindly stores to said locations of records verifying the predicate and not previously transmitted to the user, from the

encrypted Boolean values ($\overline{r_i}$, $i = 1,...,N$) obtained in step (b);

(d) the server transmits (340) the container thus constructed to the user;

(e) the user receives the container, decrypts the contents of each location (350), and determines whether the container is full or not (360);

(f1) if the container is full, the user transmits (380) a continuation request ($RC_m$) to the server for a new iteration of steps (c), (d) and (e);

(f2) if the container is not full, the user obtains the response to said request (370) from the records stored in the containers received and decrypted in step(s) (e).

2. A method for confidentially querying a database according to claim 1, **characterized in that** the table of records is represented by a matrix $\overline{\mathbf{T}}$ with a size of $N \times P$ where $N$ is the number of records in the table and $P$ the number of fields of these records, an encrypted element $\overline{A}$ of the matrix being obtained from the plaintext value $A = \sum_{q=0}^{Q-1} a_q 2^q$ by $\overline{A} \equiv \overline{a_0}, \overline{a_1}, ..., \overline{a_{Q-1}}$ where $a_q$, $q = 0,...,Q-1$ are the bits of the plaintext value and $\overline{a_q}$, $q = 0,...,Q-1$ are their corresponding encrypted elements obtained by said totally or partially homomorphic encryption.

3. A method for confidential querying of a database according to claim 2 **characterized in that** the predicate is evaluated on different records by means of additive $\oplus$ and multiplicative $\otimes$ operations on the encrypted elements.

4. A method for confidential querying of a database according to claim 3, **characterized in that** the container is represented by a matrix $\overline{\mathbf{B}}$ with a size of $K \times P$ with $K < N$, the server constructing the matrix $\overline{\mathbf{B}}$ by initializing the elements of said matrix to zero and by updating the rows of said matrix iteratively by scanning all the records from the table of records, said updating being done by means of an assignment operation:

$$\overline{\mathbf{B}} = Aff\_row\left(\overline{\mathbf{B}}, \overline{c} \otimes \overline{\mathbf{t}_i}; \overline{k}\right)$$

affecting indiscriminately the vector $\overline{c} \otimes \overline{t_i}$ at the $k^{th}$ row of $\overline{\mathbf{B}}$, where $\overline{\mathbf{t}_i}$ is a row-vector of $\overline{\mathbf{T}}$ representing a $i^{th}$ scanned record and $\overline{c}$ is an encrypted Boolean element.

5. A method for confidential querying of a database according to claim 4, **characterized in that** the step of assigning a vector $\overline{\mathbf{u}}$ of $P$ encrypted element at the $k^{th}$ row of a matrix $\overline{\mathbf{H}} = (\overline{h_{ij}})$ of encrypted elements with a size of $K \times P$ yielding a matrix $\overline{\mathbf{G}} = (g_{ij})$ of encrypted elements of the same size such as $Dec(\overline{g_{ij}}) = Dec(\overline{h_{ij}})$ $\forall i \ne k$ and $Dec(\overline{g_{kj}}) = Dec(\overline{u_j})$, $1 \le j \le P$.

6. A method for confidential querying of a database according to claim 4 or 5, **characterized in that** the encrypted Boolean element is calculated using $\overline{c} = \overline{r_i} \otimes (\overline{n_{last}} < \overline{i_{dx}}) \otimes (\overline{i_{dx}} \le \overline{n_{last} + K})$ where $\overline{r_i}$ the encrypted boolean predicate for the $i^{th}$ scanned record, $\overline{i_{dx}}$ an encrypted variable giving the number of already scanned records satisfying the predicate, $\overline{n_{last}} = (m-1)K$ where $m-1$ is the number of containers previously transmitted by the server to the user and $n_{last}$, $\overline{n_{last} + K}$ the respective encrypted elements of $n_{last}$ and $n_{last} + K$.

7. A method for confidential querying of a database according to claim 6, **characterized in that** the encrypted variable $\overline{i_{dx}}$ is updated with each scanned record by $\overline{i_{dx}} = \overline{i_{dx}} + \overline{r_i}$.

8. A method for confidential querying of a database according to claim 6 or 7, **characterized in that** the encrypted index $\overline{k}$ of the row of the matrix $\overline{\mathbf{B}}$ is updated with each scanned record by $\overline{k} = \overline{k} + \overline{c}$.

9. A method for confidential querying of a database according to any one of the preceding claims, **characterized in that** the database is partitioned into portions with a size of $N/L$ with the possible exception of a portion, the steps (c), (d), (e), (f1) - (f2) being carried out in series or in parallel, on each of said base portions.

10. A method for confidential querying of a database according to any one of the preceding claims, **characterized in that** the fully homomorphic encryption method uses a Brakerski cryptosystem.

120

110

$$R$$

$$B_1$$

$$RC_1$$

$$B_2$$

$$|$$

$$RC_{\widetilde{m}-1}$$

$$B_{\widetilde{m}}$$

$$\overline{\mathbf{T}}$$

130

<u>**Fig. 1**</u>

Initialisation de la matrice $\overline{\mathbf{B}}$ — 210

Initialisation de $n_{last}$
$$n_{last} = (m-1)K$$ — 220

Initialisation du compteur $i$ d'enregistrements dans $\overline{\mathbf{T}}$ — 230

Initialisation de la variable chiffrée $\overline{i_{dx}}$ — 240

Initialisation du compteur chiffré $\overline{k}$ de ligne courante dans le conteneur — 250

Calcul du booléen chiffré
$$\overline{c} = \overline{r_i} \otimes (\overline{n_{last}} < \overline{i_{dx}}) \otimes (\overline{i_{dx}} \leq \overline{n_{last} + K})$$ — 260

Mise à jour de la matrice $\overline{\mathbf{B}}$
$$\overline{\mathbf{B}} = Aff\_row(\overline{\mathbf{B}}, \overline{c} \otimes \overline{\mathbf{t_i}}; \overline{k})$$ — 270

Mise à jour de $\overline{i_{dx}}$
$$\overline{i_{dx}} = \overline{i_{dx}} + \overline{r_i}$$ — 280

Mise à jour de $\overline{k}$
$$\overline{k} = \overline{k} + \overline{c}$$ — 290

$i = 1, \ldots, N$

**Fig. 2**

```
┌─────────────────────────────────────────┐
│ Transmission par l'utilisateur de la requête │  ⟋310
│              R   au serveur              │
└─────────────────────────────────────────┘
                    │
                    ▼
┌─────────────────────────────────────────┐
│ Calcul des valeurs booléennes chiffrées  │
│ pour tous les enregistrements de la table │  ⟋320
│              r̄ᵢ; i=1,...,N               │
└─────────────────────────────────────────┘
                    │
                    ▼
┌─────────────────────────────────────────┐
│ Initialisation du compteur de conteneurs │  ⟋325
│                 m = 1                    │
└─────────────────────────────────────────┘
                    │
                    ▼
┌─────────────────────────────────────────┐
│ Construction  du  conteneur   Bₘ         │  ⟋330
└─────────────────────────────────────────┘
                    │
                    ▼
┌─────────────────────────────────────────┐
│ Transmission du conteneur Bₘ à l'utilisateur │  ⟋340
└─────────────────────────────────────────┘
                    │
                    ▼
┌─────────────────────────────────────────┐
│ Déchiffrement par l'utilisateur du contenu de │  ⟋350
│ chaque emplacement du conteneur Bₘ       │
└─────────────────────────────────────────┘
```

$$\overline{r_i}; i=1,...,N$$

$$m = 1$$

Construction du conteneur $B_m$

Transmission du conteneur $B_m$ à l'utilisateur

Déchiffrement par l'utilisateur du contenu de chaque emplacement du conteneur $B_m$

380

| envoi de $RC_m$ |

360

$B_m$ plein ?    Y    N

370

Obtention de la réponse à $R$

385

$$m = m + 1$$

375

fin

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Is homomorphic encryption the Holy Grail for data base queries on encrypted data ?. **S. WANG et al.** Technical report. Université de Californie, 2012

- **M. MANI et al.** Enabling secure database as a service using fully homomorphic properties : challenges and opportunities. *publié dans arXiv preprint,* 13 Février 2013, 1-13
- **Z. BRAKERSKI et al.** Leveled) fully homomorphic encryption without bootstrapping. *Proc. of ITCS,* 2012, 309-325